# EUROPEAN PATENT SPECIFICATION

(11) **EP 0 385 555 B1**
(45) Date of publication and mention of the grant of the patent: **28.07.1993**
(21) Application number: 90200467.0
(22) Date of filing: 27.02.1990
(51) Int. Cl.: C02F 3/12, C02F 3/06, B01D 53/00

(54) **Apparatus for carrying out a combined air and water purification, and also a method for operating such a purification**
Vorrichtung und Verfahren für eine kombinierte Luft- und Wasserreinigung
Appareil et procédé pour la purification combinée d'air et d'eau

(30) Priority: 28.02.1989 NL 8900494
(43) Date of publication of application: 05.09.1990
(73) Proprietor: TAUW INFRA CONSULT B.V., NL-7417 DE DEVENTER (NL)
(72) Inventor: Urlings, Leonardus Gerardus Catherina Mathias, NL-3871 TB Hoevelaken (NL)
(74) Representative: de Bruijn, Leendert C.

(56) References cited:
- EP-A- 0 071 960
- EP-A- 0 249 861
- DE-A- 3 042 192
- GB-A- 2 096 983
- US-A- 1 991 896

## Description

The invention relates to an apparatus for carrying out a combined air and water purification, comprising one or more compartments provided with inlets and outlets and partly filled with biologically active material.

Removing organic contamination from water and air with the aid of active carbon filtration is generally known. Such a system is, however, very expensive to use.

Volatile components may also be removed from the water phase by stripping. The stripping air which is liberated in this process, however, then has to be treated further. This may, for example, be done together with the air to be purified by means of active carbon filtration.

The nonvolatile components in the water phase then still have to be removed in another manner, for example by means of active carbon filtration. However, this results in an extensive system which again involves appreciable costs.

Another possibility is to treat the water biologically in an apparatus containing active sludge and to treat the air by means of active carbon. At low concentrations, however, the process involving active sludge is not sufficiently stable, while the treatment of the air with active carbon is expensive. It is also possible to purify the contaminated water biologically or physically/chemically, the contaminated air being combusted (for example, petrol vapours in soil air extraction). However, this again requires extensive safety measures.

GB-A 2 096 983 describes the process of blowing industrial gaseous emissions into an aeration tank (using fine pored aerators) of a biological effluent purification plant. Optionally air can be added in order to maintain the oxygen content, in the aeration tank, above the minimum of 2 mg/l.

First the emission is purified from "foul smelling organic or inorganic volatile substances" e.g. carbon disulphide and hydrogen sulphide. The process is directed to the purification from polar substances, using a short residence time and is in consequence only suited for soluble substances. In this context it should be emphasized that in case the liquid effluent of the process contains volatile organic compounds a serious stripping of these substances will occur.

The British patent discloses an essentially horizontal flow of the liquid and a essentially vertical upflow of the gas, without any means to retain volatile components and to submit them to further treatment.

EP-A 249 861 relates to an absorption column, with special constructed plates, over which a biomass suspension is divided. The biomass suspension is in a continuous flow through the column. The gas and liquid phase are in counter current. The apparatus can be modified for gas treatment or effluent treatment. Simultaneous treatment is possible but only in very specific cases (due to solubility and residence time). These specific cases have not been elucidated in the patent application in question. Although the simultaneous flow is mentioned, no example is directed to this embodiment.

An apparatus of the type described in the preamble has now been found which is characterized in that each compartment of the apparatus is constructed with a section having an upward flow and a section having a downward flow and is constructed in a manner such that the air to be purified and the water to be purified, optionally supplemented with additional air, are passed simultaneously through an aerobic biological system containing bacteria which are able to utilize organic compounds present as contamination as an energy and/or carbon source, the section with upwards flow being provided with a support material to which especially adapted bacteria have adhered, or the apparatus being such a construction that such bacteria can be added during operation, and characterised in that the outlet means for water and the outlet means for air, communicate with the inlet means for water and the inlet means for air of the next compartment, if any, each compartment being fitted with a closed top, such that air and water can only leave through the outlet means and pass to the lower part of the next compartment, if any, causing air and water to flow in co-current from the first to the last compartment.

According to the invention gas and liquid flow are thus co-current, this is different from GB-A 2 096 983 where there is an essentially horizontal flow of the liquid and an essentially vertical upwards flow of the gas, without any means to retain volatile components and to submit them to further treatment.

The essential difference between the invention and the teachings of EP-A 249 861 is that the latter discloses a counter current flow of gas and liquid where the present invention teaches a co-current flow of the same.

The present apparatus and process is beneficial in that it results in a purification of both contaminated ground water and soil vapour simultaneously. This simultaneous treatment and the fact that the top of the system is closed makes that no noxious components are passed into the open air.

Ground water as used here means the water obtained from a contaminated site. The water can be obtained by pumping, draining etc It will be clear, that the water can originate from percolating water through the contaminated site or from rain, etc.

Soil vapour means vapours extracted from the site.

It is expedient to use an apparatus which comprises more than one compartment, inlets being provided at the bottom in the first compartment for water to be treated and air to be treated. If an apparatus comprising a plurality of compartments is used, the number of compartments will be such that a complete purification is obtained. However, when in the passage of time the load of contamination decreases, it will be possible to disconnect one or more compartments. When desired such compartments can then be used at an other side.

It is expedient to provide the apparatus according to the invention with a device for supplying additional air at the bottom. This makes it possible to maintain a beneficial ratio between oxygen and organic contaminants and to maintain a beneficial ratio between air and water for a satisfactory flow through the system.

Expediently, the apparatus is provided at the top with a weir through which the water is passed into a next compartment where it is again fed to a point such that it flows upwards through the compartment and a discharge pipe for air (and vapour) is fitted so that the air (and vapour) is fed to the bottom of the next compartment. With such a construction a good through flow is obtained. Water and air may be fed separately via two separate pipe systems to the next compartment, or jointly through a single pipe system.

It is beneficial for a satisfactory operation if, in the section with upward through flow, support material is provided to which the micro-organisms which have to perform the conversion are able to adhere.

It is observed, that the use of a material on which micro-organisms may settle, as such is not new, it is for instance disclosed in DE-A 3 042 192 relating to a process with a simultaneous treatment of waste water and of polluted gass in an upflow reactor filled with a carrier material for micro-organisms.

By fitting a grid at the top of the compartment or the compartments it is possible to prevent the support material being entrained with the water flowing through. This therefore achieves a good separation between the water and air flowing through, on the one hand, and the support material, on the other hand.

The invention also relates to a method for purifying air and water, in which the apparatus according to the invention is used. According to an advantageous embodiment, nutrients such as nitrogen, phosphate and/or other trace elements are added as required.

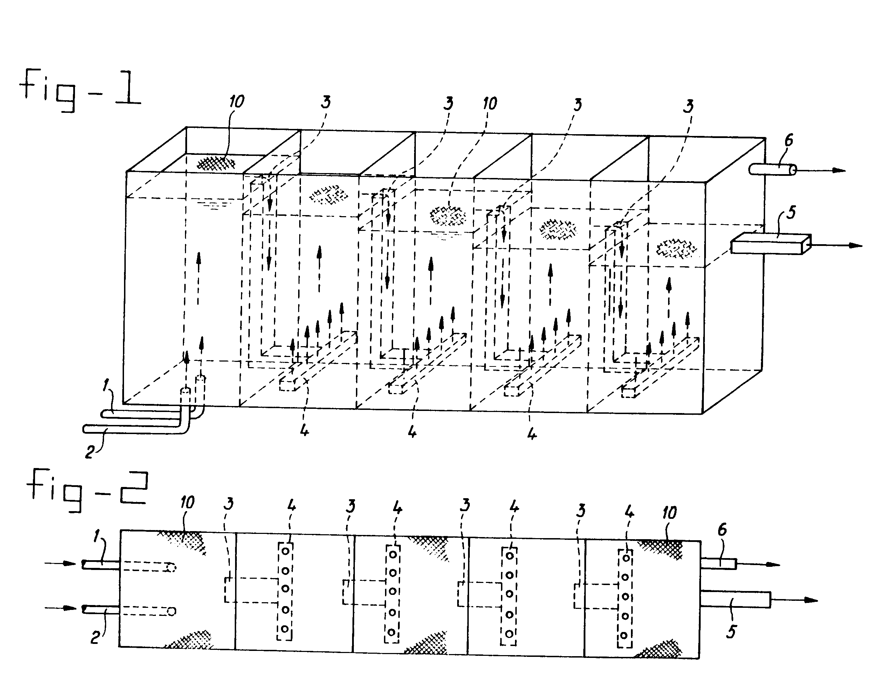

In the method according to the invention, water and air are purified in one reaction chamber. The contaminants may be either volatile, semivolatile or nonvolatile compounds which may be present either in the air to be treated or the water to be treated. By passing the air to be purified and the water to be purified simultaneously through an aerobic biological system which contains micro-organisms which are able to utilize said organic compounds as energy source and/or carbon source, the result can be achieved that the contaminants are removed from the aqueous phase and air phase in a single reactor. An installation according to this system may be composed of various compartments which are arranged behind one another in series. The water to be treated and the air to be treated are fed in at the bottom of the first compartment. In addition, additional air can be fed in at this point if desired in order to introduce sufficient oxygen into the system for the aerobic degradation of the contaminants and also to create a correct water/air ratio. The flow of water through the system is shown in Figure 1.

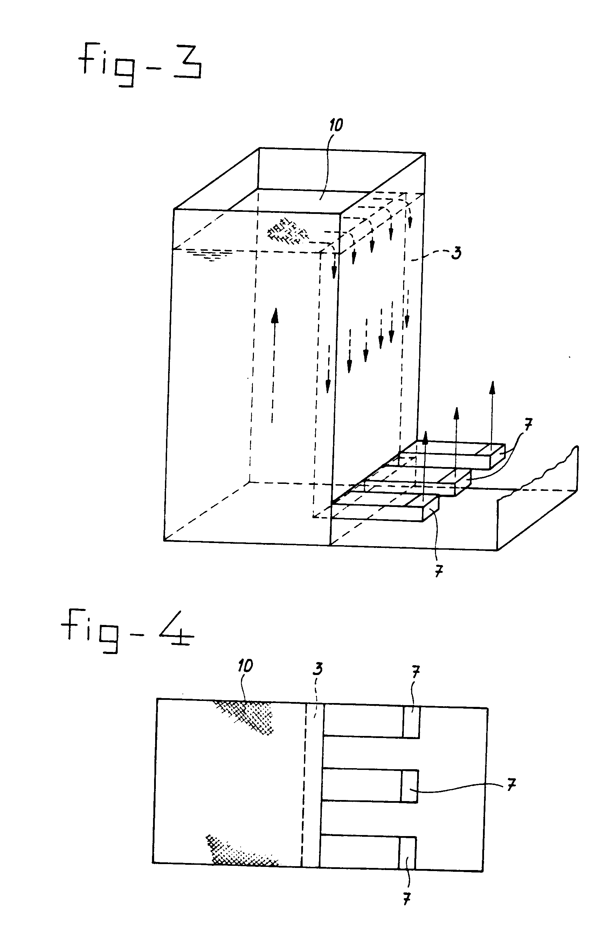

The invention is explained with reference to Figures 1 to 7 which should not, however, be interpreted as restrictive.

Figure 1 shows an apparatus according to the invention which is composed of five compartments. It will be clear that any other number of components can also be used. The water inlet and air inlet are fitted at the bottom of the first compartment (respectively (1) and (2)). The water is passed via an overflow (3) into the next compartment, where the debouchment is again fitted at the bottom. At the same time, this compartment is also provided with an air inlet (4) at the bottom. The overflow may be composed of a pipe but, in the case of higher flow rates, the overflow may be fitted over the entire wall of the compartment. The last compartment is provided with a discharge for treated water (5) and an air discharge (6).

Figure 2 shows a plan view of the inlet pipes with distribution nozzles shown in Figure 1.

Figure 3 shows an embodiment in which the overflow is fitted over the entire wall of the compartment, whereas the debouchment and inlet of air and water into the next compartment takes place via a number of inlets (7).

Figure 4 is, in this case again, a plan view.

Figure 5 illustrates the path of the airflow. The air inlet proceeds via pump (8), which provides for the necessary pressure, and pipes (4 and 9), it being possible to introduce any necessary additional air needed to introduce sufficient oxygen and to achieve the correct air/water ratio at the same time.

Said ratio must be not less than 3 and not more than 40. The air is collected at the top of the first compartment and transferred to the bottom of the next compartment by means of a pipe (9). In this manner, the airflow passes through all the compartments. The water is fed in via pipe (1) which may optionally be provided with a pump (8). (Every compartment may optionally be provided with pumps.)

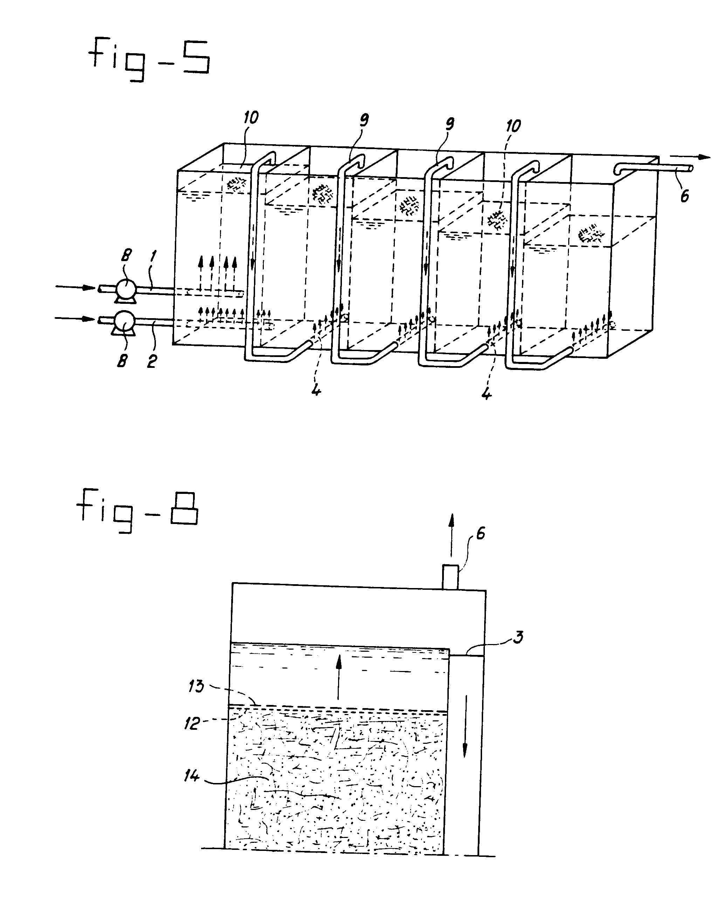

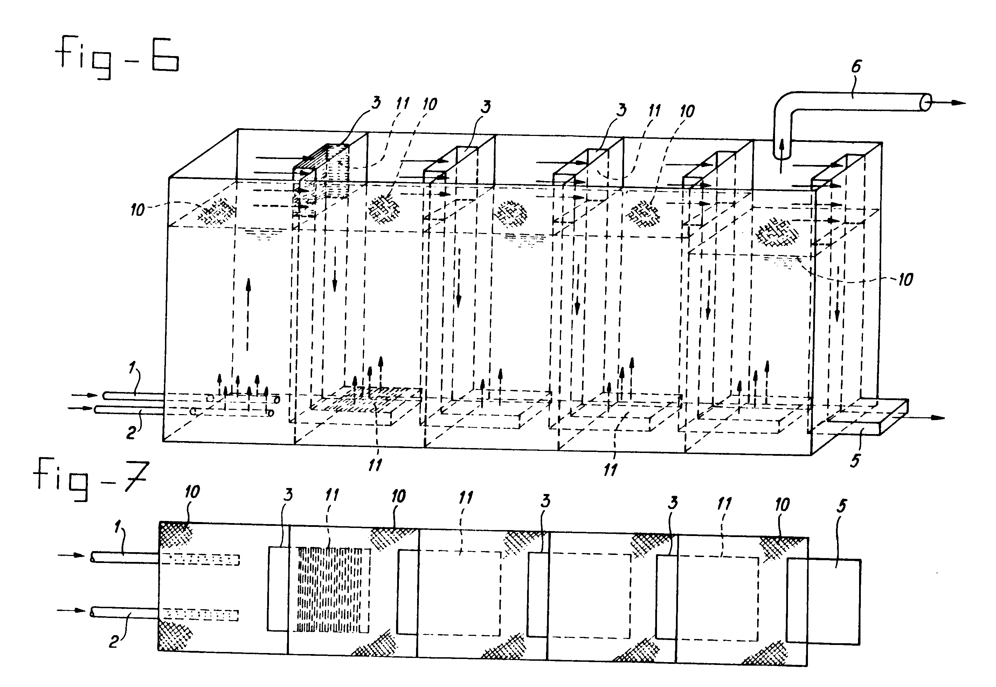

Figure 6 shows another possibility in which air and water are passed jointly through a pipe system to the next compartment. Here a grid (10) is also shown for separating support material, on the one hand, and water/air, on the other hand. A slit-grid (11) for water and air to flow through is shown at the bottom.

Figure 7 is in this case a plan view of the apparatus shown in Figure 6.

Figure 8 shows an embodiment which is advantageous if loose support material is used. Here a grid (10) which is composed, for example, of a porous grid (reinforcing) with a fine grid below it (for separating, on the one hand, support material and, on the other hand, water and air) is provided at the top of each compartment. In Figure 8, 12 indicates the fine grid and 13 the porous grid. The support material with biomas is indicated by 14.

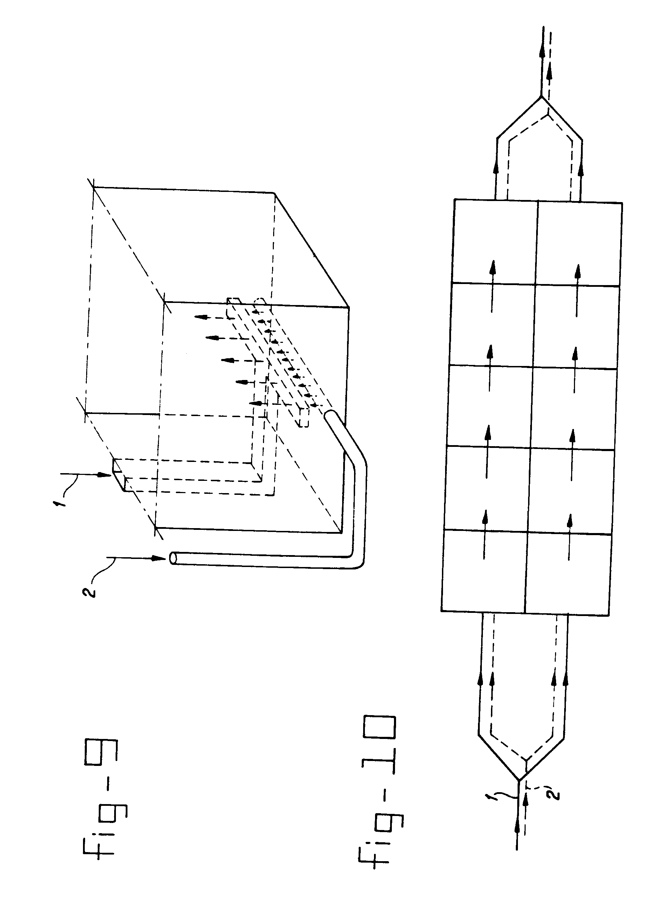

Figure 9 shows an advantageous embodiment in which, for the case of separate air and water flowthrough, the air inlet (2) is fitted below the water inlet (1) in order to obtain a good fluid distribution in each compartment.

A plug flow is created in the installation by connecting several compartments in series. This is of importance, in particular, for the removal of the contamination from the air phase. In the first compartments, contaminants in the aqueous phase are primarily degraded, but as the concentration in the aqueous phase drops, mass transfer occurs of the volatile contaminants of the air phase to the aqueous phase, as a result of which the latter are then also degraded.

Support material to which the micro-organisms are able to adhere is provided in the compartments in the section with the upward through flow. As a result of this, the system is also capable of treating air and water flows with relatively low concentrations (less than 1 mg per litre).

In order to achieve an optimum efficiency, it may be necessary to add nutrients such as nitrogen, phosphate and/or other trace elements to the installation.

The combined water purification and air purification according to the invention may be used, inter alia, in clearing contaminants from petrol stations. Volatile and nonvolatile components in the soil can be extracted by ground water extraction and soil air extraction, with the result that excavation techniques can be avoided. The soil air extracted and the ground water extracted should then, however, be purified before discharge. The system according to the invention offers a good possibility of purifying the air and the water simultaneously.

The rehabilitation of former gasworks sites can be (partially) carried out by this method. In particular, naphthalene and phenols and some of the polycyclic aromatic hydrocarbons can be removed from the soil by ground water extraction, while volatile aromatics (benzene, toluene, ethylbenzene and xylene) can be removed by soil air extraction. The water flow and airflow can then be simultaneously purified biologically by the method according to the invention.

The method according to the invention furthermore avoids the creation of new waste flows such as saturated carbon, which is produced during active carbon filtration. The combination of biological air purification and water purification furthermore offers the possibility of treating volatile and less volatile components in a single system.

The use of a number of compartments in series also promotes the formation of a plug flow which is important, in particular, for the purification of air.

The method according to the invention may furthermore be of great benefit to the chemical industry, where biologically degradable solvents are frequently used, in which connection consideration can be given to protective measures in addition to soil restoration activities. The use of an apparatus according to the invention can also render contaminants harmless by sucking off air and water before they contaminate the adjacent subsoil and ground water.

A possible implementation of the method according to the invention is explained below with reference to the examples below.

### Example I

The purging of soil contaminated with petrol and oil is started with a vacuum draining of 50 m³/h. The quantity of contamination is 1 mg/l.

For the ground water rehabilitation which then follows, 10 to 15 m³ of ground water containing a quantity of contamination exceeding 1 mg/l and a quantity of soil air of 400 m³ per day, which is equal to 17 m³ per hour, are extracted. The quantity of contamination in the soil air removed is then 150 to 200 g/m³ and drops rapidly (in 1 to 2 days) to 10 g/m³. This results in the reactor having a material loading of 50 m³/h containing approximately 1 g/m³, which is 50 g/h, via the water and 17 m³/h containing approximately 10 g/m³, which is equal to 170 g/h, via the air. The total loading of the biological system is therefore 220 g/h.

In this case, assuming that the conversion of -CH₂- + 1.5 O₂ yields CO₂ + H₂O, it can be calculated that 3.5 g of oxygen is required for 1 g of petrol. If the reactor has a material loading of 220 g/h, 770 g of O₂ per hour is therefore required. Air contains approximately 250 g of O₂ per m³. The minimum aeration flow requirement of the reactor is therefore 3.1 m³/h.

The reactor system according to the invention is based on the air/lift reactor system in which polyurethane sponges can be used as support material for the biomass. The influent (the water flow) is introduced at the bottom of the reactor together with the air to be treated and the aeration air.

The total reactor volume must be not less than 10 m³ if a hydraulic loading of 50 m³ per hour is used. The residence time is then not less than 12 minutes.

The air/water ratio must be not less than 10. For a water flow rate of 50 m³/h, the aeration flow rate should be 500 m³/h.

As far as possible, the reactor must have a plug flow nature, which achieves the result that the degradation of the petrol components present in the water takes place first. Then transfer of petrol components takes place from air to the aqueous phase and these are then also degraded.

The reactor should preferably be compact in construction and be capable of being used at more than one site (it must therefore be transportable) and must be flexible enough to also be able to treat other flow rates and material loadings.

In the implementation of the method according to the invention, the water flow and airflow is split into two subflows which each pass through a purification line. Each purification line is composed of, for example, five compartments in series. This achieves the result that the system is flexible (two lines) and a plug flow is produced (five compartments in series). The principle is shown in Figure 7. The structure per purification installation is then as follows: each purification line is composed of five components which each have a surface area of 1 x 1 m² and a height of 2 m. Both the water flow rate (5-25 m³/h) and the airflow rate (via air extraction 8 m³/h and via aeration 250 m³/h) enter at the bottom of the first compartment.

It is preferable that the compartments are constructed in a manner such that they are accessible by means of a manhole at the top of every compartment. Furthermore, every compartment is preferably provided with a facility for sludge discharge. Every compartment is also preferably provided with a facility for removing or adding polyurethane sponges without the separating grid at the top of the compartment having to be removed.

## Claims

1. Apparatus for carrying out a combined air and water purification, comprising one or more compartments provided with inlets and outlets and partly filled with biologically active material, characterized in that each compartment of the apparatus is constructed with a section having an upward flow and a section having a downward flow and is constructed in a manner such that the air to be purified and the water to be purified, optionally supplemented with additional air, are passed simultaneously through an aerobic biological system containing bacteria which are able to utilize organic compounds present as contamination as energy source and/or carbon source, the section with upward through flow being provided with support material to which specially adapted bacteria have adhered, or the apparatus being such a construction that such bacteria can be added during operation, and in that the outlet means for water and the outlet means for air communicate with the inlet means for water and the inlet means for air of the next compartment, if any, each compartment being fitted with a closed top such that air and water can only leave through the outlet means and pass to the lower part of the next compartment, if any, causing air and water to flow in cocurrent from the first to the last compartment.

2. Apparatus according to Claim 1, characterized in that it comprises more than one compartment, the inlet being provided at the bottom of the first compartment for the water to be treated and the air to be treated.

3. Apparatus according to Claim 2, characterized in that a device for supplying additional air/oxygen is also fitted to the bottom of one or more compartments.

4. Apparatus according to Claims 1 - 3, characterized in that it is provided at the top with a weir through which the water is passed into a next compartment where it is again fed to a point such that it flows upwards through it and where a discharge pipe for the air is fitted so that the air is fed to the bottom of the next compartment.

5. Apparatus according to Claim 4, characterized in that it is provided at the top with an overflow through which water and air are passed into a next component, the inlet of water and air to the next compartment being such that it flows upwards through it.

6. Apparatus according to Claim 1 -5, characterized in that the inlet of the air to be treated and inlet of additional air are connected to more than one compartment.

7. Apparatus according to Claims 1 - 6, characterized in that, in the section with upward through flow, support material is provided to which bacteria are able to adhere.

8. Apparatus according to Claim 7, characterized in that, at the top of the compartment(s), a grid is provided which separates the support material from the water flowing through and the air flowing through.

9. Method for removing volatile and non-volatile organic substances simultaneously from air and water characterized in that an apparatus according to claim 1 to 8 is used therein.

## Patentansprüche

1. Vorrichtung zur Durchführung einer kombinierten Luft- und Wasserreinigung, umfassend einen oder mehrere Abteile, die mit Zuleitungen und Ableitungen versehen und mit biologisch aktivem Material teilweise gefüllt sind, dadurch gekennzeichnet, dass jeder Abteil der Vorrichtung mit einem Abschnitt mit aufwärtsgerichteter Strömung und mit einem Abschnitt mit abwärtsgerichteter Strömung ausgebildet ist und auf solche Weise ausgebildet ist, dass die zu reinigende Luft und das zu reinigende, wahlweise mit Zusatzluft ergänzte Wasser gleichzeitig durch ein aerobes biologisches System durchgeführt werden, welches Bakterien enthält, die fähig sind, als Energiequelle und/oder Kohlenstoffquelle als Kontamination vorhandene organische Verbindungen zu verwenden, wobei der Abschnitt mit aufwärtsgerichteter Strömung mit Trägermaterial versehen ist, dem speziell geeignete Bakterien anhaften, oder wobei die Vorrichtung von solcher Ausbildung ist, dass solche Bakterien während des Betriebs beigegeben werden können, und dadurch, dass die Ableitungsmittel für Wasser und die Ableitungsmittel für Luft mit den Zuleitungsmitteln für Wasser und den Zuleitungsmitteln für Luft des nächsten Abteils, falls vorhanden, verbunden sind, wobei jedes Abteil mit einem verschlossenen Oberteil ausgestattet ist, so dass Luft und Wasser nur durch die Ableitungsmittel austreten und zum unteren Teil des nächsten Abteils, falls vorhanden, übertreten können, mit der Folge, dass Luft und Wasser in gleichgerichteten Strömen vom ersten zum letzten Abteil fliessen.

2. Vorrichtung nach Anspruch 1, dadurch gekennzeichnet, dass sie mehr als ein Abteil umfasst, wobei die Zuleitung für das zu behandelnde Wasser und die zu behandelnde Luft am Unterteil des ersten Abteils vorgesehen ist.

3. Vorrichtung nach Anspruch 2, dadurch gekennzeichnet, dass ein Einrichtung zur Zufuhr von zusätzlicher Luft/ /zusätzlichem Sauerstoff ebenfalls am Unterteil eines oder mehrerer Abteile angeordnet ist.

4. Vorrichtung nach den Ansprüchen 1 bis 3, dadurch gekennzeichnet, dass sie am Oberteil mit einem Damm versehen ist, durch welchen das Wasser zu und in einen nächsten Abteil durchgeleitet wird, wo es wiederum an einer solchen Stelle zugeleitet wird, dass es durch dieses nach oben fliesst, und wo ein Entlastungsrohr für die Luft angeordnet ist, so dass die Luft zum Unterteil des nächsten Abteils zugeleitet wird.

5. Vorrichtung nach Anspruch 4, dadurch gekennzeichnet, dass sie am Oberteil mit einem Überlauf versehen ist, durch welchen Wasser und Luft zu und in einen nächsten Abteil durchgeleitet werden, wobei die Zuleitung von Wasser und Luft zum nächsten Abteil so erfolgen, dass es bzw. sie durch diesen nach oben fliessen.

6. Vorrichtung nach den Ansprüchen 1 bis 5, dadurch gekennzeichnet, dass die Zuleitung der zu behandelnden Luft und die Zuleitung der zu behandelnden Zusatzluft mit mehr als einem Abteil verbunden sind.

7. Vorrichtung nach den Ansprüchen 1 bis 6, dadurch gekennzeichnet, dass im Abschnitt mit aufwärtsgerichteter Strömung Trägermaterial vorgesehen ist, dem speziell geeignete Bakterien anhaften können.

8. Vorrichtung nach Anspruch 4, dadurch gekennzeichnet, dass am Oberteil des Abteils bzw. der Abteile ein Gitter vorgesehen ist, welches das Trägermaterial vom durchfliessenden Wasser und von der durchfliessenden Luft trennt.

9. Verfahren zum gleichzeitigen Entfernen von flüchtigen und nichtflüchtigen organischen Stoffen aus Luft und Wasser, dadurch gekennzeichnet, dass dabei eine Vorrichtung nach den Ansprüchen 1 bis 8 verwendet wird.

## Revendications

1. Appareil pour effectuer une purification combinée d'air et d'eau, comportant un ou plusieurs compartiments pourvus d'entrées et de sorties et partiellement remplis de matériau biologiquement actif, caractérisé en ce que chaque compartiment de l'appareil est conçu avec une section qui présente un écoulement vers le haut et une section qui présente un écoulement vers le bas et est conçu de manière telle que l'air à purifier et l'eau à purifier, complétée si on le désire par de l'air additionnel, sont amenés à passer simultanément à travers un système biologique aérobie contenant des bactéries qui sont capables d'utiliser comme source d'énergie et/ou de carbone des composés organiques présents en tant que contamination, la section traversée par l'écoulement vers le haut étant pourvue de matériau de support auquel des bactéries spécialement appropriées ont été amenées à adhérer, ou bien l'appareil étant conçu de manière telle que de telles bactéries puissent être ajoutées pendant le fonctionnement, et en ce que les moyens de sortie pour l'eau et les moyens de sortie pour l'air communiquent avec les moyens d'entrée pour l'eau et les moyens d'entrée pour l'air du prochain compartiment s'il en existe, chaque compartiment étant équipé d'un sommet fermé tel que l'air et l'eau puissent seulement le quitter à travers les moyens de sortie et passer vers la partie inférieure du prochain compartiment s'il en existe, ce qui fait s'écouler l'air et l'eau en courants de même sens depuis le premier compartiment jusqu'au dernier.

2. Appareil selon la revendication 1, caractérisé en ce qu'il comporte plus d'un compartiment, l'entrée de l'eau à traiter et de l'air à traiter étant prévue au fond du premier compartiment.

3. Appareil selon la revendication 2, caractérisé en ce qu'au fond d'un ou plusieurs compartiments est aussi adapté un dispositif de fourniture d'air/d'oxygène additionnel.

4. Appareil selon les revendications 1 à 3, caractérisé en ce qu'il est pourvu en son sommet d'un barrage à travers lequel l'eau est amenée à passer pour accéder à un prochain compartiment où elle est à nouveau fournie en un emplacement tel qu'elle s'écoule vers le haut à travers celui-ci et où est adapté un tube de décharge pour l'air de manière telle que l'air est fourni au fond du prochain compartiment.

5. Appareil selon la revendication 4, caractérisé en ce qu'il est pourvu en son sommet d'un trop-plein à travers lequel l'eau et l'air sont amenés à passer pour accéder à un prochain compartiment, l'entrée d'eau et d'air dans le prochain compartiment se faisant de manière telle qu'il s'écoulent vers le haut à travers celui-ci.

6. Appareil selon les revendications 1 à 5, caractérisé en ce que l'entrée de l'air à traiter et l'entrée d'air additionnel sont reliées à plus d'un compartiment.

7. Appareil selon les revendications 1 à 6, caractérisé en ce qu'il est prévu dans la section qui présente un écoulement vers le haut un matériau de support auquel des bactéries sont capables d'adhérer.

8. Appareil selon la revendication 7, caractérisé en ce qu'au sommet du ou des compartiments est prévue une grille qui sépare le matériau de support de l'eau qui s'écoule à travers celui-ci et de l'air qui s'écoule à travers celui-ci.

9. Procédé pour éliminer simultanément de l'air et de l'eau des substances organiques volatiles et non volatiles, caractérisé en ce que l'on y utilise un appareil selon les revendications 1 à 8.
